# EUROPEAN PATENT APPLICATION

(11) **EP 1 238 583 A2**
(43) Date of publication of application: **11.09.2002**
(21) Application number: 02380047.7
(22) Date of filing: 27.02.2002
(51) Int. Cl.: A01K 63/00

(54) **Interactive aquarium**

(30) Priority: 09.03.2001 ES 200100550
(71) Applicant: Bogdanich Sampellegrini, Esteban Carlos, 50006 Zaragoza (ES)
(72) Inventor: Bogdanich Sampellegrini, Esteban Carlos, 50006 Zaragoza (ES)
(74) Representative: Cobas Horcajo, Susana

(57) **Abstract**

Starting from a pool (1) of any conventional size and form, the pool in the proper sense of the term is mounted over a supporting structure (2) which raises it considerably, while built into said structure (2) are a number of galleries (3), preferably arranged radially and meeting at the centre of the pool, the size of these galleries being such that it permits the transit of people through them, while their ceiling coincides with the floor (5) of the pool (1); and in the ceiling of the galleries (3) is positioned a series of skylights (4), appropriately distributed, transparent and of sufficient size to accommodate the head of at least one person; and each gallery (3) is provided below with fixed or mobile platforms (6) for the suitable bodily elevation of the visitors to the corresponding skylight (4); and all this with the result that, in contrast to the traditional viewing from above or from the side of the pool (1), a view is obtained from the bottom of the same, similar to the view that would be obtained from the very seabed.

## Description

### OBJECT OF THE INVENTION

The herein invention refers to an aquarium, to be precise a large aquarium of the kind of dimensions used in zoos, theme parks, and so forth and intended for the housing of a certain number of living marine species for their viewing by visitors.

The object of the invention is to make considerable improvements to the conditions for observation of the interior of the aquarium on the part of the aforementioned visitors through the achievement of a totally new visual effect, to be precise the viewing of the interior from its floor, with a perspective similar to that which the viewer would have from the seabed, that is to say, as if the viewer were a diver.

### BACKGROUND OF THE INVENTION

The exhibition of different fish species is currently carried out by means of aquariums which, above all in the case of marine species, attain very considerable dimensions that are subject solely to the planned costs of investment and the needs of the place where they are to be sited.

The conception of conventional aquariums is based on the creation of a floor that reproduces or simulates a seabed, which may or may not have different types of irregularities and might be equipped with aquatic plants, and a partially or totally glazed side wall, the result of which is that an enclosed walkway through the aquarium enables the marine species housed within it to be viewed through the glazed areas of the side wall.

The upshot of this is that the viewer can only observe close-up those fish that at a given moment happen to be near the viewer's viewing point. Consequently, those species which for whatever reason happen to be in the central zone of the aquarium may only be viewed with some difficulty, and may even be invisible when hidden by the rocks or other protuberances with which the aquarium's floor is decorated.

Evidently the greater the dimensions of the aquarium's floor area and, consequently, the distance between the fish to be viewed and the viewer, the more this kind of problem is aggravated.

### DESCRIPTION OF THE INVENTION

The aquarium proposed by the invention has been conceived and structured in order to find a fully satisfactory solution for the sort of problem explained above, thus permitting the visitors to get as close as possible to any species they may wish to view, especially when this species remains motionless, and additionally offering a viewpoint that is completely out of the ordinary in that, as stated above, visitors will be able to view the species from the floor of the aquarium, from manifold points chosen according to their own criteria, and as if they had been transformed into a diver moving over the seabed.

To this end, and to be more precise, starting with an aquarium in the proper sense of the term and similar to any large-size conventional aquarium, the invention consists in incorporating into the same a lower structure with a series of suitably distributed galleries, through which a considerable number of people may wander. The ceiling of these galleries coincides with the floor of the aquarium, while the galleries are punctuated with a number of transparent skylights which have been dimensioned in such a way as to permit visitors to insert their heads into them and which project into the aquarium so that, when a visitor inserts his/her head into one of these skylights, the greater part of the volume of the aquarium in the proper sense of the term may be viewed from the aquarium's floor.

An adequate number and distribution of the said galleries, subject both to the structural requirements involved in the aquarium's construction and to the need to accommodate the greatest possible number of people, permits maximum exploitation of the number of skylights and, consequently, the number of viewpoints.

The galleries will be of a height that allows people to circulate without having to stoop, while in order that they might insert their heads into the skylights, it is planned to set up daises or raised platforms at each skylight, with appropriate means of access for a number of people together and positioned to coincide with the said skylights. These daises or raised platforms may be fixed or mobile, activated in the latter case by any suitable mechanism of a mechanical, electrical, pneumatic or hydraulic type, while a continuous platform could even be fitted along one of the sides of each gallery affecting simultaneously all that gallery's skylights, but at the same time leaving sufficient space on the floor of each gallery for at least two people to be able to pass each other with ease.

The preferred arrangement of the galleries will be radial, all of them meeting at the centre of the aquarium, in order to make easier or to minimise the trajectory to be followed by any viewer from one viewing point to another, although it should be obvious that any other arrangement that might be deemed appropriate may be adopted.

As a complementary measure, and with the aim of creating a suitable ambience, the lighting will be dim and the aquarium will be fitted with audio equipment which generates a blanket of marine sound that simulates the ocean's depths.

The skylights may optionally be of an extra-large size in order to permit the simultaneous access for viewing of more than one person, while at the level of its entrance the aquarium will be fitted with a perimeter walkway for visitor access which permits the visitors to view not only the different marine species as they ply their way through the aquarium but also the hundreds of human heads rising, as it were, from the depths of the sea, in intimate symbiosis.

### DESCRIPTION OF THE DRAWINGS

To complement the herein specification and in order to assist in the better understanding of the invention's characteristics, in accordance with a preferred example of its practical embodiment, there is enclosed as an integral part of said specification a set of drawings wherein has been represented for illustrative but not limiting purposes the following:

Figure 1.- Shows a schematic representation of a side view of an interactive aquarium embodied in accordance with the object of the herein invention.

Figure 2.- Shows a schematic representation of the ground plan of the same aquarium in accordance with a cylindrical embodiment of the same, as represented in figure 1.

Figure 3.- Shows, lastly, an amplified perspective detail of one of the galleries that forms part of the aquarium, with its various accessories.

### PREFERRED EMBODIMENT OF THE INVENTION

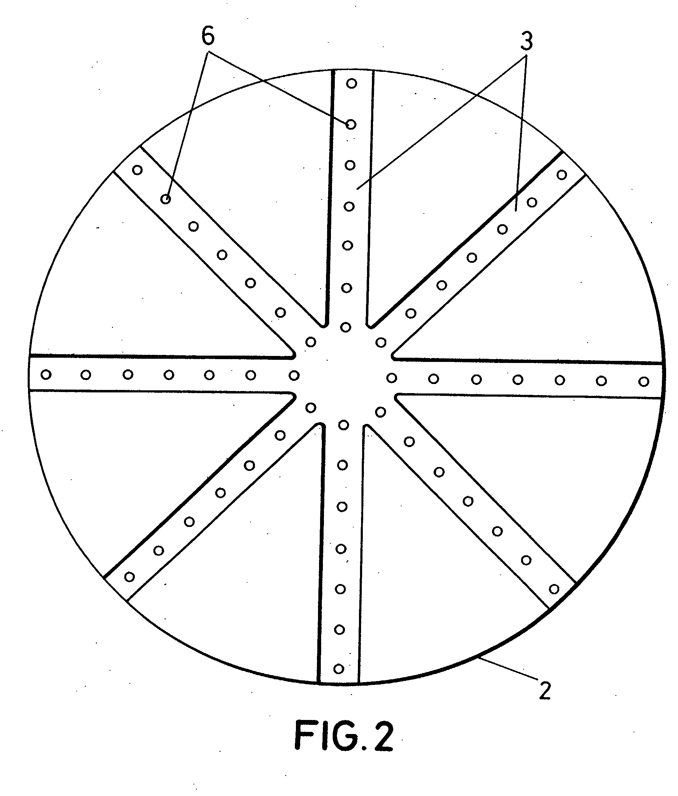

It may be observed in the aforementioned figures how the aquarium as proposed by the invention is constituted on the basis of a pool or aquarium in the proper sense of the term (1) which, in the example of embodiment chosen, takes on a cylindrical form, although any form or size may be adopted. The pool (1) is elevated markedly with the aid of a lower supporting structure (2) in which a number of galleries (3) are laid out, taking on, as may be seen in figure 2, a radial configuration and meeting at the centre of the aquarium. The number, arrangement and configuration of the galleries may vary without in any way affecting the essence of the invention. This radial arrangement has been chosen on account of its being the most suitable since it both shortens the distance to be travelled by visitors between any two viewing points and improves the structural conditions in order to withstand the considerable weight represented by the water contained in the pool (1).

In any case, the galleries (3) will present a section that makes transit easy for the visitors, that is to say a height that enables the visitors to transit with easy and without feeling oppressed by the height of the galleries and without being obstructed or causing any obstruction in the case of any possible circulation of visitors in the opposite direction. Into the ceiling of these galleries (3) will be set a number of perfectly transparent skylights (4) which project into the inside of the pool (1), that is to say they are positioned on the pool's floor (5). These skylights have sufficient capacity to accommodate the head of at least one individual who may thus view through the skylight the inside of the pool (1) from the pool's floor, that is to say from a viewpoint that is quite out of the ordinary.

In order that the visitors might have access to the skylights (4), it is planned to fit a number of daises or platforms (6) over the passages defined in the galleries (3) which, coinciding in number and position with the skylights (4), permit the visitors, once in position upon them, to insert their heads into the skylights (4). To this end, and as is logical, these raised platforms (6) must be stepped not only to ease access to their upper part but also to enable the use of different levels depending on the physique of each individual. Nevertheless, and as mentioned above, these raised platforms (6) may be mobile, activated mechanically, electrically, hydraulically or pneumatically, in such a way that in normal conditions they remain at the level of the floor of the gallery (3) and that they may be raised to any level when about to be used.

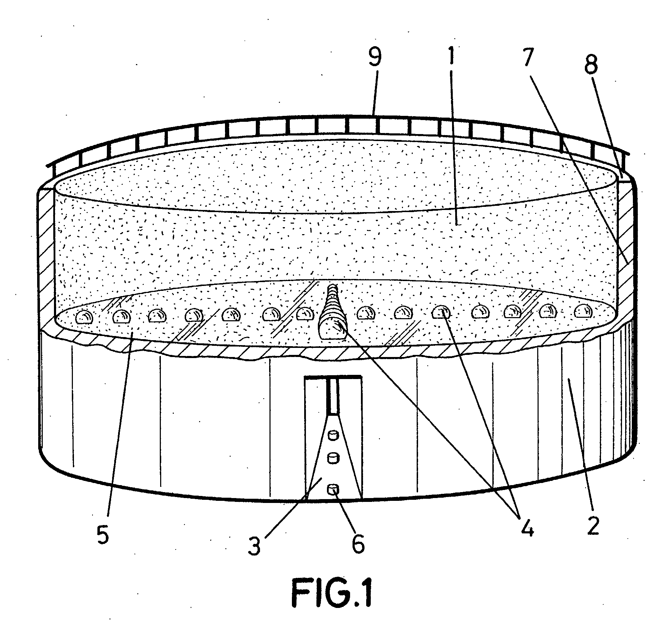

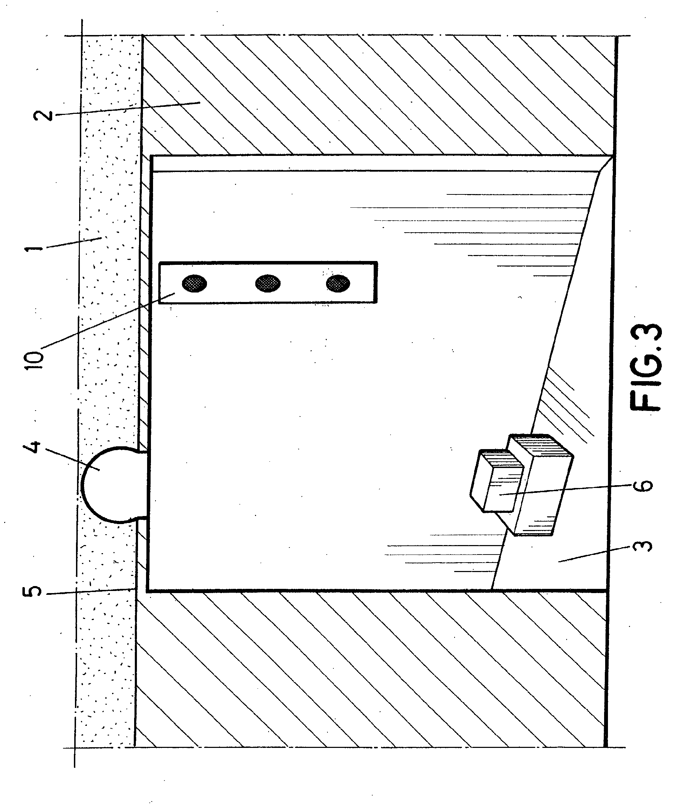

In figure 1 the raised platforms (6) have been arranged along a line running down the middle of the passage so that, for instance, the visitors may move in one direction along one side of the passage and in the other direction along the other side. But the raised platforms (6) may also be positioned along one of the side walls of the gallery (3), as shown in figure 3, but always facing the skylights (4), in such a way that in this case the area for transit is concentrated towards the other side of the passage.

It is also possible, above all in the case of fixed and stepped daises as in figure 3, for a single continuous platform to run the whole length of the gallery, being shared by all that gallery's skylights.

The side wall (7) of the pool (1) may be opaque and surmounted with a perimeter walkway (8) with its corresponding protective handrail (9), so that the visitors may view the pool or aquarium in the proper sense of the term (1) from the aquarium's upper part, thus seeing not only the marine species housed in the pool (1) but also the skylights (4) in its floor and, consequently, the human heads accommodated inside them. In the same way the side wall (7) of the pool (1) may be partially or totally transparent in order to make it also possible to gain a side view of the inside of the aquarium from a perimeter gallery positioned at a suitable height and not shown in the drawings.

Throughout the galleries (3), above all in the access zones to them, loudspeakers (10) will be fitted that belong to the aforementioned sound system and will accompany the visual experience of the visitors with a blanket of sound which will ease and improve the visitor's acclimatisation by reproducing the sounds of the seabed.

## Claims

1. Interactive aquarium which, being of the type of aquarium that configure a large capacity pool, of appropriate form and dimensions, inside which are housed different species of living marine species and the floor of which simulates, for example, a seabed, is **characterised in that** the said pool (1) is mounted over a supporting structure (2) which determines the pool's marked elevation, while a number of galleries (3) are built into the said supporting structure (2) whose dimensions are sufficient to enable the easy transit of people through the same; and **in that** the ceiling of these galleries (3) coincides with the floor (5) of the pool (1), and into it are set a number of transparent skylights (4) which penetrate inside the pool (1) and which are of sufficient size to accommodate the head of at least one person. The result of all of this is that the different marine species may be viewed from manifold points on the floor (5) of the pool (1), just as in the natural world they would be observed from the seabed.

2. Interactive aquarium, according to claim 1, **characterised in that** in the different galleries (3) are set up daises or raised platforms (6), which do not impede the transit of people through the galleries and which, coinciding in number and position with the skylights (4), permit the bodily ascent of said people in order to insert their heads into the corresponding skylights.

3. Interactive aquarium, according to claim 2, **characterised in that** the stated daises or platforms may be fixed, in which case they will be stepped so as to both make access easier for the people and to adapt their height to people of different heights; or they may be mobile on activation by mechanical, electrical, pneumatic or hydraulic means.

4. Interactive aquarium, according to the preceding claims, **characterised in that** the galleries (3) will preferably be of a radial arrangement, meeting at the centre of the pool (1), although other arrangements may be adopted.

5. Interactive aquarium, according to the preceding claims, **characterised in that** at strategic points in the galleries (3) are positioned loudspeakers (10) that belong to an audio system which, together with dim lighting, enables the visitors to be acclimatised atmospherically to the ambience of the ocean depths, with a blanket of marine sound.

6. Interactive aquarium, according to the preceding claims, **characterised in that** at the level of the entry to the pool (1) is established a perimeter walkway (8) which affords a view of the pool (1) from above, while it is also planned that the pool's (1) side wall (7) may optionally be partially or totally transparent, in which case there would be a second perimeter walkway for viewing said pool (1) from the side.
